# EUROPÄISCHE PATENTANMELDUNG

(11) **EP 4 092 369 A1**
(43) Veröffentlichungstag der Anmeldung: **23.11.2022**
(21) Anmeldenummer: 22164285.3
(22) Anmeldetag: 25.03.2022
(51) Int. Cl.: F28D 1/04

(54) **VERBINDUNGSSYSTEM ZUM VERBINDEN VON ZWEI WÄRMETAUSCHERN, WÄRMETAUSCHER, WÄRMETAUSCHERANORDNUNG UND KRAFTFAHRZEUG**

(30) Priorität: 18.05.2021 DE 102021204988
(71) Anmelder: VOLKSWAGEN AG, 38440 Wolfsburg (DE)
(72) Erfinder: Diedrich, Mathias, 38165 Lehre (DE)

(57) **Zusammenfassung**

Ein Verbindungssystem (1) zum Verbinden von zwei Wärmetauschern (11, 12) umfasst eine Schnellkupplung (20) zur Bereitstellung einer Fluidverbindung zwischen den zwei Wärmetauschern (11, 12) sowie mindestens eine Kopplungs- und Positioniereinrichtung (30). Die Schnellkupplung (20) umfasst ein Einsteckteil (21) zur Anordnung an einem ersten der zwei Wärmetauscher (11, 12) und ein Aufnahmeteil (22) für das Einsteckteil (21) an dem zweiten der zwei Wärmetauscher (12, 11), wobei das Einsteckteil (21) und das Aufnahmeteil (22) eine Fügerichtung (Fs) für die Schnellkupplung (20) definieren. Die Kopplungs- und Positioniereinrichtung (30) umfasst einen Führungszapfen (31) zur Anordnung an einem der zwei Wärmetauscher (11, 12) und eine Buchse (32) für den Führungszapfen (31) zur Anordnung an dem anderen der zwei Wärmetauscher (12, 11), wobei der Führungszapfen (31) und die Buchse (32) eine translatorische Fügerichtung (F_{P}) für die Kopplungs- und Positioniereinrichtung (30) definieren. Die Fügerichtung (Fs) der Schnellkupplung (20) und die Fügerichtung (F_{P}) der Kopplungs- und Positioniereinrichtung (30) sind zueinander parallel. Weiterhin werden ein Wärmetauscher, eine Wärmetauscheranordnung und ein Kraftfahrzeug angegeben, in welchen das Verbindungssystem (1) implementiert ist.

## Beschreibung

Die Erfindung bezieht sich auf ein Verbindungssystem zum Verbinden von zwei Wärmetauschern, umfassend eine Schnellkupplung zur Bereitstellung einer Fluidverbindung zwischen den zwei Wärmetauschern, wobei die Schnellkupplung ein Einsteckteil zur Anordnung an einem ersten der zwei Wärmetauscher und ein Aufnahmeteil für das Einsteckteil an dem zweiten der zwei Wärmetauscher umfasst, wobei das Einsteckteil und das Aufnahmeteil eine Fügerichtung für die Schnellkupplung definieren.

Weiterhin bezieht sich die Erfindung auf einen Wärmetauscher für ein Kühlsystem eines Kraftfahrzeugs, umfassend ein Element einer Schnellkupplung zur Bereitstellung einer Fluidverbindung zwischen zwei Wärmetauschern, wobei das Element ein Einsteckteil oder ein Aufnahmeteil für das Einsteckteil ist.

Ferner bezieht sich die Erfindung auf eine Wärmetauscheranordnung und auf ein Kraftfahrzeug mit einem Verbindungssystem zum Verbinden von zwei Wärmetauschern.

In Kraftfahrzeugen werden Wärmetauscher zu unterschiedlichen Zwecken, beispielsweise als Wasserkühler, Ladeluftkühler, Ölkühler, im Rahmen einer Klimaanlage oder dergleichen eingesetzt. Die einzelnen Kühlsysteme können dabei miteinander verknüpft sein. Dies erfordert eine entsprechende Verbindung der jeweiligen Kühlkreisläufe und dementsprechend der jeweiligen Wärmetauscher. Zudem können solche Kühlkreisläufe gegebenenfalls mit mehreren Wärmetauschern kaskadiert sein. Oftmals werden zur Verbindung der einzelnen Wärmetauscher Leitungen in Form von Schläuchen oder Rohrstücken verwendet, die an die jeweiligen Wärmetauscher angeschlossen sind.

Es ist jedoch auch bekannt, Wärmetauscher durch eine Schnellkupplung fluidisch direkt miteinander zu verbinden, wie dies beispielsweise in DE 10 2014 201 991 A1 und 10 2019 214 119 A1 beschrieben ist, welche jeweils ein Verbindungssystem der eingangs genannten Art zeigen. Diese bekannten Verbindungssysteme sind jedoch wenig flexibel, wenn man wahlweise unterschiedliche Wärmetauscher verbinden möchte oder in der Serienfertigung von Kraftfahrzeugen die Anzahl der Wärmetauscher je nach Fahrzeugkonfiguration variiert werden soll.

Der Erfindung liegt die Aufgabe zugrunde, den Einsatz von Wärmetauschern in einem Kraftfahrzeug mit möglichst geringem Aufwand flexibler zu gestalten.

Diese Aufgabe wird durch ein Verbindungssystem zum Verbinden von zwei Wärmetauschern gemäß Patentanspruch 1 gelöst. Das erfindungsgemäße Verbindungssystem zeichnet sich insbesondere dadurch aus, dass dieses zusätzlich zur Schnellkupplung für die Fluidverbindung mindestens eine Kopplungs- und Positioniereinrichtung umfasst, wobei die Kopplungs- und Positioniereinrichtung einen Führungszapfen zur Anordnung an einem der zwei Wärmetauscher und eine Buchse für den Führungszapfen zur Anordnung an dem anderen der zwei Wärmetauscher umfasst, wobei der Führungszapfen und die Buchse eine translatorische Fügerichtung für die Kopplungs- und Positioniereinrichtung definieren, und wobei die Fügerichtung der Schnellkupplung und die Fügerichtung der Kopplungs- und Positioniereinrichtung zueinander parallel sind.

Das Zusammenfügen der beiden Wärmetauscher erfolgt in einer translatorischen Bewegung, bei welcher sowohl die mindestens eine Kopplungs- und Positioniereinrichtung als auch die Schnellkupplung miteinander in Eingriff gelangen. Im Vergleich zu einem Einschwenken in die Montageendposition sind die räumlichen Einschränkungen in Bezug auf die Ausgestaltung der einzelnen Wärmetauscher weniger restriktiv. Hierdurch wird es beispielsweise möglich, sehr einfach Wärmetauscher unterschiedlicher Größe miteinander zu verbinden. Zudem kann die Anzahl der eingesetzten Wärmetauscher unschwer variiert werden. Insbesondere ist auch Kaskadierung mit mehr als zwei Wärmetauschern möglich.

Durch die direkte Kopplung der Wärmetauscher miteinander entfällt die Notwendigkeit zusätzlicher Leitungselemente zwischen diesen, wodurch der Teile- und Montageaufwand außerordentlich gering ausfällt.

Zudem lässt sich hierdurch eine sehr kompakte Bauweise bewerkstelligen.

Im Unterschied zu DE 10 2019 214 119 A1 wird mit der vorliegenden Erfindung eine fluidische Direktverbindung zwischen zwei Wärmetauschern geschaffen und diese zugleich als Steckverbindung genutzt.

Besondere Ausführungsarten der Erfindung sind Gegenstand weiterer Patentansprüche.

So können insbesondere die Schnellkupplung und die Kopplungs- und Positioniereinrichtung jeweils zur Bewerkstelligung einer linearen Fügebewegung angeordnet und konfiguriert sein.

Gemäß einer weiteren besonderen Ausführungsart weist der Führungszapfen eine Längsachse in Fügerichtung auf und das Einsteckteil und das Aufnahmeteil weisen eine Durchflussrichtung in Fügerichtung auf. Dabei verläuft die Längsachse des Führungszapfens parallel zur Durchflussrichtung.

Vorzugsweise sind die Schnellkupplung und die Kopplungs- und Positioniereinrichtung derart aufeinander abgestimmt, dass bei einer linearen Fügebewegung in Fügerichtung der Führungszapfen und die Buchse in Kontakt gelangen, bevor das Einsteckteil und das Aufnahmeteil in Kontakt gelangen. Dies gewährleistet ein passgenaues Verbinden von Einsteckteil und Aufnahmeteil und vermeidet Beschädigungen an diesen sowie gegebenenfalls auch solchen Beschädigungen resultierende Leckagen.

Ferner können die Schnellkupplung und die Kopplungs- und Positioniereinrichtung derart aufeinander abgestimmt sein, dass bei einer linearen Fügebewegung in Fügerichtung die Kopplungs- und Positioniereinrichtung verrastet, nachdem das Einsteckteil und das Aufnahmeteil in Kontakt gelangt sind. Dies stellt sicher, dass beim Zusammenfügen der Wärmetauscher das Einsteckteil und das Aufnahmeteil stets sicher miteinander verbinden werden. Durch die Verrastung können zudem die Wärmetauscher stabil gegeneinander fixiert werden.

Ein Verrasten kann über entsprechende Einrichtungen, welche an dem Führungszapfen und der Buchse ausgebildet sind, bewerkstelligt werden. Es ist jedoch auch möglich, im Rahmen der Kopplungs- und Positioniereinrichtung parallel zum Führungszapfen einen Rasthaken anzuordnen, welcher mit einer korrespondierenden Ausnehmung in Eingriff gelangt. Ein solcher Rasthaken kann auf der Seite des Führungszapfens angeordnet sein. Es ist jedoch auch möglich, den Rasthaken auf der Seite der Buchse anzuordnen. Die korrespondierende Ausnehmung befindet sich dann jeweils auf der gegenüberliegenden Seite.

Gemäß einer weiteren besonderen Ausführungsart definieren die Schnellkupplung und zwei Kopplungs- und Positioniereinrichtungen in einer Ankopplungsebene die Spitzen eines gedachten Dreiecks. Die entsprechenden Fügerichtungen der Schnellkupplung und der Kopplungs- und Positioniereinrichtungen sind senkrecht zu dieser Ankopplungsebene. Dies ermöglicht eine besonders stabile Verbindung von zwei Wärmetauschern. Die Schnellkupplung, welche vor allem einer Fluidverbindung der Wärmetauscher dient, übernimmt hierbei gleichzeitig, wie die Kopplungs- und Positioniereinrichtung, eine mechanische Befestigungsfunktion.

Die oben genannte Aufgabe wir ferner durch einen Wärmetauscher für ein Kühlsystem eines Kraftfahrzeugs gemäß Patentanspruch 6 gelöst, in welchen eine Seite des vorstehend erläuterten Verbindungssystems integriert ist. Dementsprechend umfasst der Wärmetauscher ein Element der Schnellkupplung, nämlich das Einsteckteil oder das Aufnahmeteil für das Einsteckteil, sowie ferner ein Element der Kopplungs- und Positioniereinrichtung, nämlich den Führungszapfen oder die Buchse für den Führungszapfen. Dabei weisen das Element der Schnellkupplung und das Element der Kopplungs- und Positioniereinrichtung an dem Wärmetauscher zueinander parallele Fügerichtungen in Bezug auf das jeweilige Gegenstück auf. Vorliegend werden das Aufnahmeteil und das Einsteckteil als Gegenstücke zueinander verstanden. Entsprechendes gilt für den Führungszapfen und die Buchse.

Die oben genannte Aufgabe wird weiterhin durch eine Wärmetauscheranordnung für ein Kraftfahrzeug gemäß Patentanspruch 7 gelöst. Diese Wärmetauscheranordnung umfasst mindestens einen ersten Wärmetauscher und einen zweiten Wärmetauscher, die durch ein Verbindungssystem der vorstehend erläuterten Art miteinander verbunden sind. Aufgrund des Verbindungssystems können vorliegend Wärmetauscher mit unterschiedlichen Abmessungen zum Einsatz kommen, wodurch ein modulares System ermöglicht wird.

In einer besonderen Ausführungsart der Wärmetauscheranordnung kann zwischen dem ersten und zweiten Wärmetauscher ein Schaltventil zum Schalten eines Kühlmittelstroms vorgesehen sein, um in einer ersten Stellung Kühlmittel (beispielsweise Wasser, Öl, Kältemittel, Ladeluft) lediglich über den ersten Wärmetauscher zu leiten und in einer zweiten Stellung Kühlmittel über beide Wärmetauscher zu leiten. Hierdurch kann die Kühlkapazität an unterschiedliche Betriebs- und Umgebungsbedingungen angepasst werden. Das Schaltventil ist vorzugsweise in einem der Wärmetauscher angeordnet. Es kann jedoch auch in die Schnellkupplung integriert sein.

Die Erfindung schlägt weiterhin ein Kraftfahrzeug mit einer Wärmetauscheranordnung gemäß Patentanspruch 9 vor. Bei diesem sind der erste Wärmetauscher und der zweite Wärmetauscher in Fahrtrichtung hintereinanderliegend angeordnet und derart fluidverbunden, dass Kühlmittel zunächst in den in Fahrtrichtung hintenliegenden Wärmetauscher eintritt, bevor dieses in den in Fahrtrichtung vornliegenden Wärmetauscher gelangt. Dies ist insbesondere dann vorteilhaft, wenn die Wärmetauscher vom Kühlmittel in Reihe durchströmt werden.

In einer Ausführungsvariante ist die Wärmetauscheranordnung in einem Radhaus des Kraftfahrzeugs angeordnet. Dies wird erst aufgrund der sehr kompakten Direktverbindung der Wärmetauscher möglich. Die Wärmetauscheranordnung kann hier insbesondere als skalierbarer Zusatzkühler ausgeführt sein, für den lediglich der Bauraum in einem frontseitigen Radhaus zur Verfügung steht, weil beispielsweise der Bauraum am anderen frontseitigen Radhaus für andere Zwecke, beispielsweise für eine Standheizung benötigt wird.

Nachfolgend wird die Erfindung anhand von in der Zeichnung dargestellten Ausführungsbeispielen näher erläutert. Die Zeichnung zeigt in:
- Figur 1: ein Ausführungsbeispiel für eine Wärmetauscheranordnung mit einem Ausführungsbeispiel eines erfindungsgemäßen Verbindungssystems in Explosionsdarstellung,
- Figur 2: eine räumliche Ansicht der Wärmetauscheranordnung nach Figur 1 im zusammengebauten Zustand,
- Figur 3: eine Seitenansicht des Verbindungssystems nach Figur 1,
- Figur 4: eine Ansicht von oben auf das Verbindungssystem nach Figur 1,
- Figur 5: eine Detailansicht der Kopplungs- und Positioniereinrichtung des Verbindungssystems nach Figur 1 im gekoppelten Zustand,
- Figur 6: eine Detailansicht einer Seite der Kopplungs- und Positioniereinrichtung des Verbindungssystems nach Figur 1 an einem Wärmetauscher,
- Figur 7: eine Detailansicht der anderen Seite der Kopplungs- und Positioniereinrichtung des Verbindungssystems nach Figur 1 an einem weiteren Wärmetauscher,
- Figur 8: eine Darstellung zur Veranschaulichung der Verwendung eines Wärmetauschers allein,
- Figur 9: eine Darstellung zur Veranschaulichung einer Verwendung einer Wärmetauscheranordnung aus zwei direkt gekoppelten Wärmetauschern,
- Figur 10: eine Darstellung zur Veranschaulichung einer weiteren Verwendung einer Wärmetauscheranordnung aus zwei direkt gekoppelten Wärmetauschern,
- Figur 11: eine Darstellung zur Veranschaulichung einer weiteren Verwendung einer Wärmetauscheranordnung aus zwei direkt gekoppelten Wärmetauschern mit einem Schaltventil,
- Figur 12: eine Darstellung zur Veranschaulichung einer Verwendung einer Wärmetauscheranordnung aus zwei direkt gekoppelten Wärmetauschern unterschiedlicher Größe,
- Figur 13: eine Darstellung zur Veranschaulichung einer weiteren Verwendung einer Wärmetauscheranordnung aus zwei direkt gekoppelten Wärmetauschern unterschiedlicher Größe,
- Figur 14: ein erstes Ausführungsbeispiel für eine erste Einbausituation eines Wärmetauschers an einem Kraftfahrzeug, und in
- Figur 15: ein zweites Ausführungsbeispiel für eine zweite Einbausituation einer Wärmetauscheranordnung mit zweit direkt gekoppelten Wärmetauschern an einem Kraftfahrzeug.

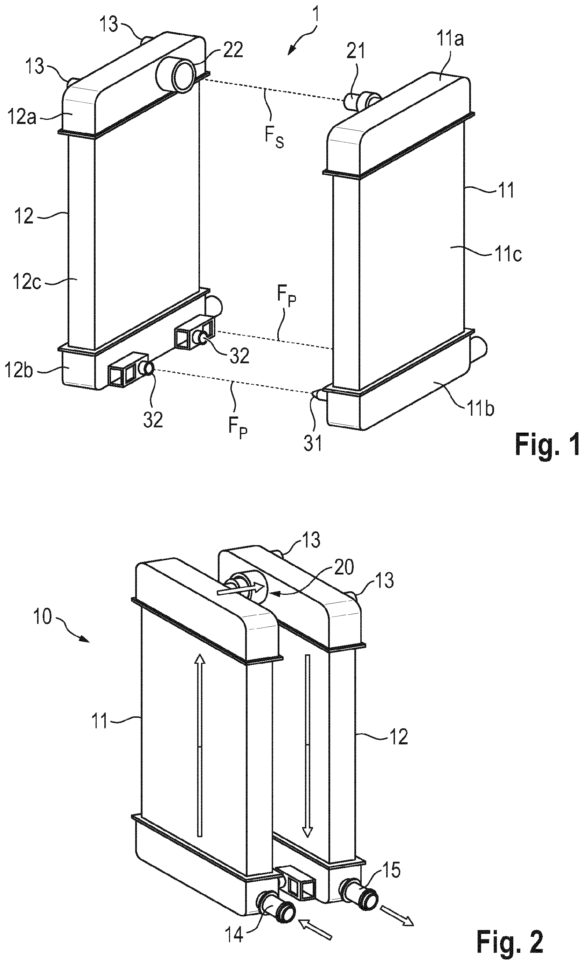

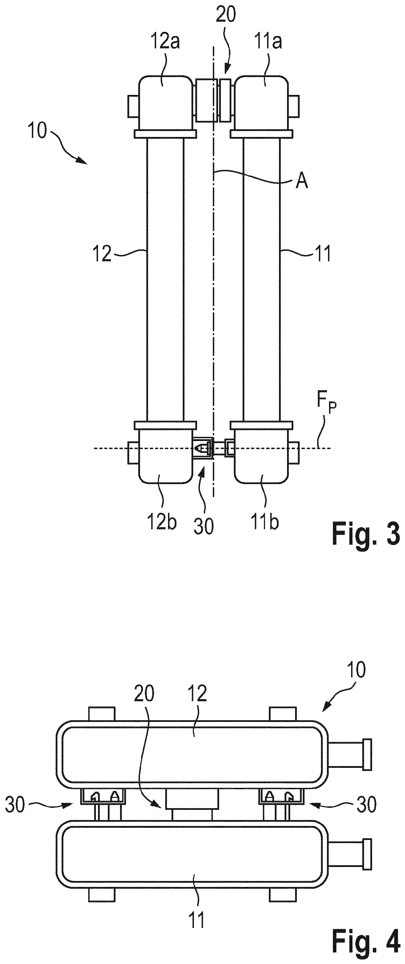

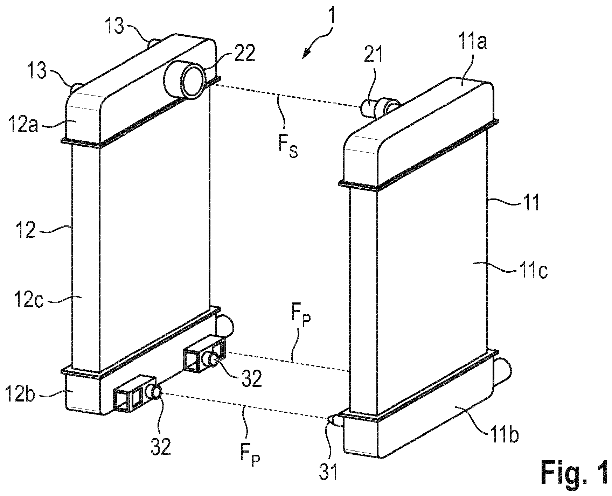

Die in den Figuren 1 bis 15 dargestellten Ausführungsbeispiele betreffen ein Verbindungssystem 1 zum Verbinden von zwei Wärmetauschern 11 und 12 an einem Kraftfahrzeug. Hierdurch wird eine in Bezug auf die benötigten Bauteile sowie in Bezug auf den Montageaufwand günstige Schnittstellenkonfiguration geschaffen, welche zum einen eine Fluidverbindung zwischen den zwei Wärmetauschern 11, 12 bereitstellt und zum anderen eine genaue Positionierung und Kopplung untereinander ermöglicht. Dadurch werden der Montageablauf vereinfacht und die Gefahr von Beschädigungen insbesondere der Fluidverbindung zwischen den beiden Wärmetauschern 11, 12 vermieden.

In den Figuren wird überwiegend die Verbindung von zwei Wärmetauschern gezeigt. Dies ist jedoch lediglich beispielhafter Natur. Das Schnittstellenprinzip kann auch auf eine größere Anzahl von Wärmetauschern 11, 12 ausgedehnt werden.

Überdies ist es möglich, Wärmetauscher unterschiedlicher Größe und Bauart über eine einheitliche Schnittstellenkonfiguration miteinander zu koppeln.

Die Wärmetauscher können in Reihe oder parallel geschaltet sein.

Weiterhin ist es möglich, einen einzelnen Wärmetauscher, an welchem das erfindungsgemäße Schnittstellenprinzip verwirklich ist, gleichwohl in herkömmlicher Weise über Leitungen für das Wärmetauscherfluid anzuschließen.

Durch diese Modularisierung wird ein höchst flexibles Wärmetauschersystem geschaffen, das für unterschiedliche Wärmetauscherfunktionen, welche gegebenenfalls auch miteinander gekoppelt werden können, hervorragend geeignet ist. Als Beispiele seien hier die Wärmetauscherfunktionen eines Wasserkühlers, eines Ladeluftkühlers, eines Ölkühlers und einer Klimaanlage an einem Kraftfahrzeug genannt.

Durch die Modularisierung ist eine Anpassung an die von einem Fahrzeug benötigte Kühlleistung sehr einfach möglich.

Das Schnittstellenprinzip soll nun zunächst anhand der Fig. 1 bis 7 näher erläutert werden. Das entsprechende Verbindungssystem 1 umfasst eine Schnellkupplung 20 zur Bereitstellung einer Fluidverbindung zwischen den zwei Wärmetauschern 11, 12 sowie ferner mindestens eine Kopplungs- und Positioniereinrichtung 30 zum Positionieren der beiden Wärmetauscher 11, 12 gegeneinander sowie zum Koppeln miteinander.

In den Figuren 1 bis 7 sind zwei Kopplungs- und Positioniereinrichtung 30 vorgesehen. Jedoch ist auch eine Ausführung mit lediglich einer Kopplungs- und Positioniereinrichtung 30 oder mit mehr als zwei Kopplungs- und Positioniereinrichtungen 30 möglich.

Die Schnellkupplung 20 weist ein Einsteckteil 21 zur Anordnung an einem ersten der Wärmetauscher 11 und ein Aufnahmeteil 22 für das Einsteckteil 21 an dem zweiten der zwei Wärmetauscher 12 auf, wobei hier angemerkt sei, dass die Bezeichnung als erster und zweiter Wärmetauscher funktional beliebig ist.

Die Schnellkupplung 20 ist derart konfiguriert, dass das Einsteckteil 21 und das Aufnahmeteil 22 eine Fügerichtung F_{S} für die Schnellkupplung 20 definieren. Beide Kupplungselemente 21 und 22 sind durch eine lineare Fügebewegung koppelbar und müssen dabei zueinander nicht verdreht werden.

Das Einsteckteil 21 kann dabei zum Beispiel als VDA-Stutzen ausgeführt sein. Hierbei handelt es sich um einen vom Verband der Automobilindustrie (VDA) genormten Stutzen, welcher speziell in Stutzen-Schlauch-Schnellkupplungen beispielsweise zum Anschluss von Kühlwasser- oder Ladeluftschläuchen zum Einsatz kommt. Eine Schnellkupplung dieser Bauart sowie ferner eine Schnellkupplung im Allgemeinen, insbesondere im Sinne einer fluidischen Steckverbindung, werden erfindungsgemäß zur Direktverbindung von zwei Wärmetauschern 11, 12 ohne zusätzlichen Schlauch oder zusätzliches Rohrleitungsstück eingesetzt werden.

Wie in den Figuren 1 bis 7 beispielhaft dargestellt, können solche Strukturen unmittelbar in einen Abschnitt des Wärmetauschers 11, 12 integriert sein. Das Ausführungsbeispiel zeigt an den Wärmetauschern 11, 12 Kopfstücke 11a und 12a, in welche neben internen Leitungsverbindungen des Wärmetauschers sowie gegebenenfalls weiteren Fluidanschlüssen 13 das Einsteckteil 21 und das Aufnahmeteil 22 jeweils einstückig integriert sind. Es ist jedoch auch möglich, entsprechende Elemente 21, 22 unmittelbar, d.h. ohne Zwischenschaltung eines zusätzlichen separaten Schlauch- oder Rohrstücks an dem jeweiligen Wärmetauscher 11, 12, insbesondere einem Einlass- oder Auslasskanal desselben, zu befestigen.

Die mindestens eine Kopplungs- und Positioniereinrichtung 30 weist einen Führungszapfen 31 zur Anordnung an einem der zwei Wärmetauscher 11 und eine Buchse 32 für den Führungszapfen 31 zur Anordnung an dem anderen der zwei Wärmetauscher 12 auf. Die Buchse 32 dient der Aufnahme des Führungszapfens 31 und ist derart konfiguriert, um den Führungszapfen 31 entlang einer geraden Bahn vorzugsweise gleitbewegbar zu führen.

Der Führungszapfen 31 und die Buchse 32 definieren eine translatorische Fügerichtung F_{P} für die Kopplungs- und Positioniereinrichtung 30.

Wie Fig. 1 entnommen werden kann, sind die Fügerichtung F_{S} der Schnellkupplung 20 und die Fügerichtung F_{P} der Kopplungs- und Positioniereinrichtung 30 zueinander parallel.

Die Schnellkupplung 20 und die mindestens eine Kopplungs- und Positioniereinrichtung 30 sind jeweils zur Bewerkstelligung einer linearen Fügebewegung angeordnet und konfiguriert.

Der Führungszapfen 31 weist eine Längsachse in Fügerichtung F_{P} auf, während das Einsteckteil 21 und das Aufnahmeteil 22 eine Durchflussrichtung in Fügerichtung F_{S} aufweisen. Die Längsachse des Führungszapfens 31 ist dabei parallel zur Durchflussrichtung.

Weiterhin können wie bei dem dargestellten Ausführungsbeispiel die Schnellkupplung 20 und die Kopplungs- und Positioniereinrichtung 30 derart aufeinander abgestimmt sein, dass bei der linearen Fügebewegung in Fügerichtung F_{P} und F_{S} der Führungszapfen 31 und die Buchse 32 in Eingriff miteinander gelangen und dementsprechend bereits aneinander geführt werden, bevor das Einsteckteil 21 und das Aufnahmeteil 22 in Kontakt gelangen. Hierdurch wird eine definierte Annäherung von Einsteckteil 21 und Aufnahmeteil 22 gewährleistet.

Ferner können die Schnellkupplung 20 und die Kopplungs- und Positioniereinrichtung 30 derart aufeinander abgestimmt sein, dass bei der linearen Fügebewegung in Fügerichtung F_{P} und F_{S} die Kopplungs- und Positioniereinrichtung 30 verrastet, nachdem das Einsteckteil 31 und das Aufnahmeteil 32 in Kontakt gelangt sind.

Dadurch ist es möglich, die Wärmetauscher 11 und 12 in der Montageendposition der Schnellkupplung 20 stabil aneinander zu befestigen. Dabei gewährleistet die Führung eine Sicherung gegen eine unerwünschte Verlagerung quer zur Fügerichtung, während die Verrastung eine Sicherung in Fügerichtung bewirkt.

Die Verrastung kann unmittelbar durch entsprechend an dem Fügezapfen 21 und der Buchse 32 ausgebildete Eingriffsstrukturen erfolgen.

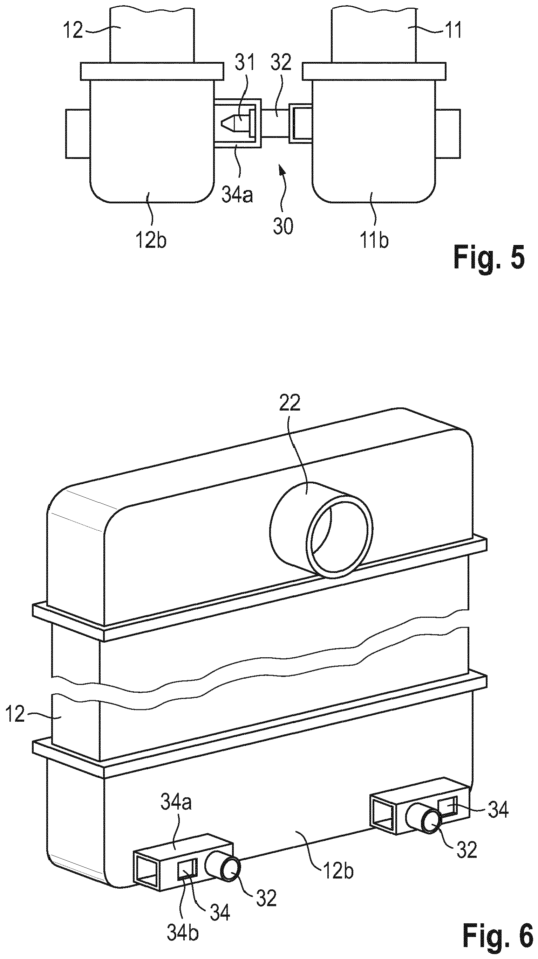

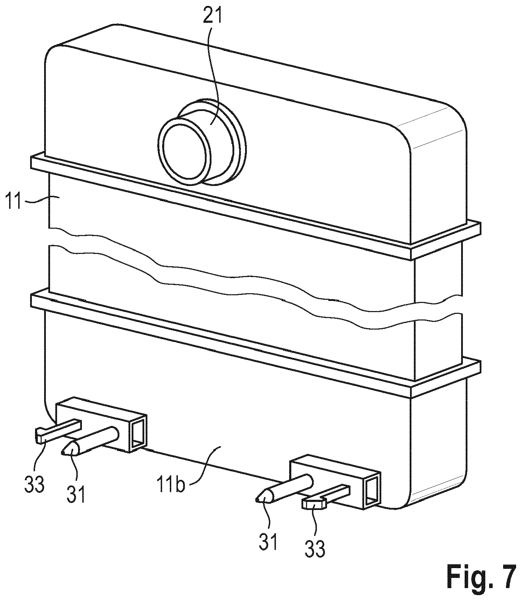

Bei dem dargestellten Ausführungsbeispiel ist eine weitere Möglichkeit gezeigt, die in den Fig. 6 und 7 gut zu erkennen ist. Parallel zum Führungszapfen 31 und zur Buchse 32 weist die Kopplungs- und Positioniereinrichtung 30 hierbei einen Rasthaken 33 und eine korrespondierende Ausnehmung 34 auf.

Die Ausnehmung 34 kann beispielsweise durch einen Bügel 34a bereitgestellt sein, welcher mit einer entsprechenden Öffnung 34b für den Rasthaken 33 versehen ist. Der Bügel 34a kann optional zusätzlich die Buchse 32 tragen.

Die Eingriffsposition des Rasthakens 33 ist dabei auf die Montageendposition der Schnellkupplung 20 abgestimmt. Während des Zusammenfügens wird der Rasthaken 33 beim Kontakt mit der korrespondierenden Ausnehmung 34 zur Seite gedrängt, um nach deren Überwindung zurückzufedern und diese Ausnehmung 34 zum Zweck der Axialsicherung zu hintergreifen.

In den Figuren 1 bis 7 ist der Rasthaken 33 kann auf der Seite des Führungszapfens 31 angeordnet, während sich die korrespondierende Ausnehmung 34 auf der Seite der Buchse 32 befindet. Eine umgekehrte Anordnung ist jedoch ebenfalls möglich.

Das Ausführungsbeispiel zeigt an den Wärmetauschern 11, 12 Bodenstücke 11b und 12b, in welche neben internen Leitungsverbindungen des jeweiligen Wärmetauschers 11, 12 sowie gegebenenfalls weiteren Fluidanschlüssen 14, 15 der Rasthaken 33 und/oder die korrespondierende Ausnehmung 34 einstückig integriert sind. Es ist jedoch auch möglich, entsprechende Elemente 33, 34 anderweitig an dem jeweiligen Wärmetauscher 11, 12 zu befestigen. Die Bodenstücke 11b und 12b sind über Mittelabschnitte 11c und 12c, welche die eigentliche Wärmetauschfunktion bereitstellen, mit den Kopfstücken 11a und 12a verbunden.

In einer Ausführungsvariante definieren die Schnellkupplung 20 und zwei Kopplungs- und Positioniereinrichtungen 30 in einer Ankopplungsebene A die Spitzen eines gedachten Dreiecks. Hierdurch wird eine stabile Kopplung zwischen den beiden Wärmetauschern 11 und 12 erzielt.

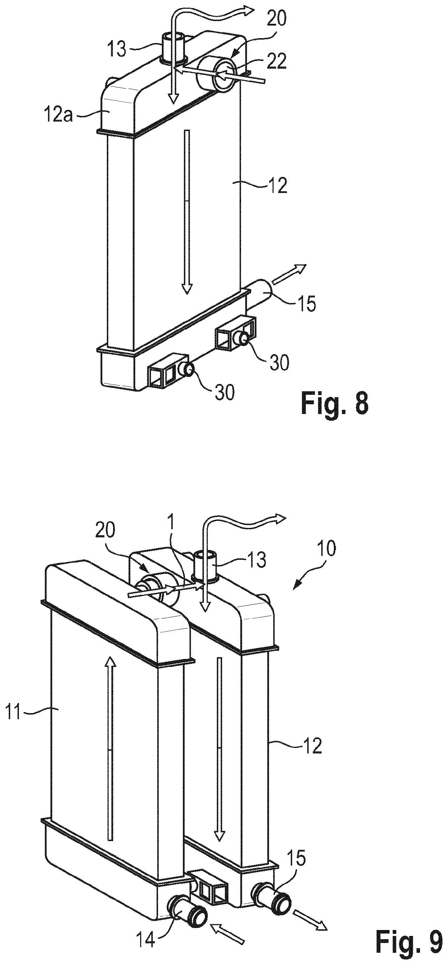

Im zusammengebauten Zustand bilden die beiden direktverbundenen Wärmetauscher 11 und 12 eine Wärmetauscheranordnung 10, welche in weiter unten anhand der Fig. 8 bis 15 noch näher erläuterter Weise an einem Kraftfahrzeug eingesetzt werden kann.

Die einzelnen Wärmetauscher 11 und 12 können durch translatorisches Aufeinanderzubewegen miteinander zusammengefügt werden. Die Befestigung aneinander wird durch die Schnellkupplung 20 und die mindestens eine Kopplungs- und Positioniereinrichtung 30 bewerkstelligt und gewährleistet, ohne dass hierfür zusätzliche Bauteile erforderlich wären.

Die Schnittstellenkonfiguration erlaubt jedoch auch eine Einzelverwendung eines Wärmetauschers 11, 12 aus einer solchen Wärmetauscheranordnung 10, indem an das betreffende Element der Schnellkupplung eine Leitung in Form eines Schlauchs oder Rohrstücks in herkömmlicher Weise angeschlossen wird.

Eine solcher Wärmetauscher 11, 12 für ein Kühlsystem eines Kraftfahrzeugs als Modulkomponente eines Wärmetauschersystems 10 umfasst demnach ein Element der Schnellkupplung 20 zur Bereitstellung einer Fluidverbindung zwischen zwei Wärmetauschern 11, 12, sei es das Einsteckteil 21 oder das Aufnahmeteil 22, sowie ein Element der Kopplungs- und Positioniereinrichtung 30, sei es der Führungszapfen 31 oder die Buchse 32 für den Führungszapfen 31. Wie oben bereits ausgeführt, weisen das Element der Schnellkupplung 20 und das Element der Kopplungs- und Positioniereinrichtung 30 zueinander parallele Fügerichtungen F_{S} und F_{P} in Bezug auf das jeweilige Gegenstück auf.

Fig. 8 zeigt beispielhaft einen solchen Wärmetauscher 12 in Einzelanwendung mit einem zusätzlichen integrierten Fluidanschluss 13, welcher vorliegend senkrecht in Form eines Stutzens vom Kopfstück 12a abgeht. Das Bodenstück 12b weist einen seitlichen Fluidanschluss 15 auf. Beide Fluidanschlüsse 13 und 15 sind senkrecht zum Fluidanschluss über das Element, vorliegend das Ausnahmeteil 22, der Schnellkupplung 20.

Fig. 9 zeigt den Wärmetauscher 12 aus Fig. 8 in Kombination mit einem weiteren Wärmetauscher 11, welcher mit dem erstgenannten Wärmetauscher 12 über ein Verbindungssystem 1 der oben erläuterten Art zu einer Wärmetauscheranordnung 10 verbunden ist. Beide Wärmetauscher 11, 12 sind hier in Reihe geschaltet.

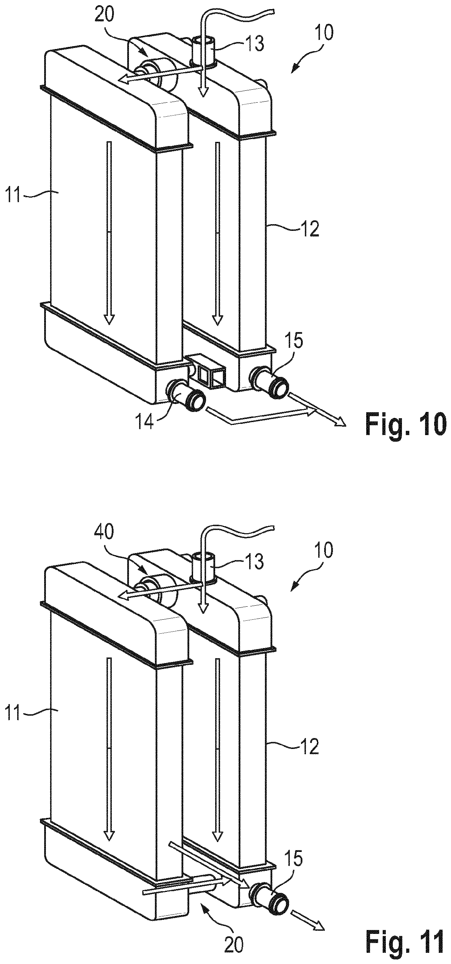

Fig. 10 zeigt als weitere Möglichkeit eine Parallelschaltung der Wärmetauscheranordnung aus Fig. 9. Zu kühlendes Fluid wird in diesem Fall über den Fluidanschluss 13 am Wärmetauscher 12 zugeführt und strömt von dort durch diesem zum Fluidanschluss 15 dieses Wärmetauschers 12. Ein Teil des Fluidstroms wird parallel über die Schellkupplung in den weiteren Wärmetauscher 11 geleitetet und strömt durch diesen zu dessen Fluidanschluss 14.

Die Ströme der Fluidanschlüsse 14 und 15 werden außerhalb der Wärmetauscheranordnung wieder zusammengeführt.

Fig. 11 zeigt eine Abwandlung von Fig. 10 mit einer Zusammenführung der abzuführenden Fluidströme über eine weitere Schnellkupplung 20 zwischen den Wärmetauschern 11 und 12 und eine Ableitung über den Fluidanschluss 15 des Eingangs-Wärmetauschers 12

Ferner zeigt Fig. 11 die Möglichkeit, zwischen dem ersten und zweiten Wärmetauscher 11, 12 ein Schaltventil 40 zum Schalten des Kühlmittelstroms vorzusehen. In einer ersten Stellung des Schaltventils 40 wird Kühlmittel lediglich über den Eingangs-Wärmetauscher 12 geleitet. In einer zweiten Stellung wird Kühlmittel wie in Fig. 10 über beide Wärmetauscher 11, 12 geleitet.

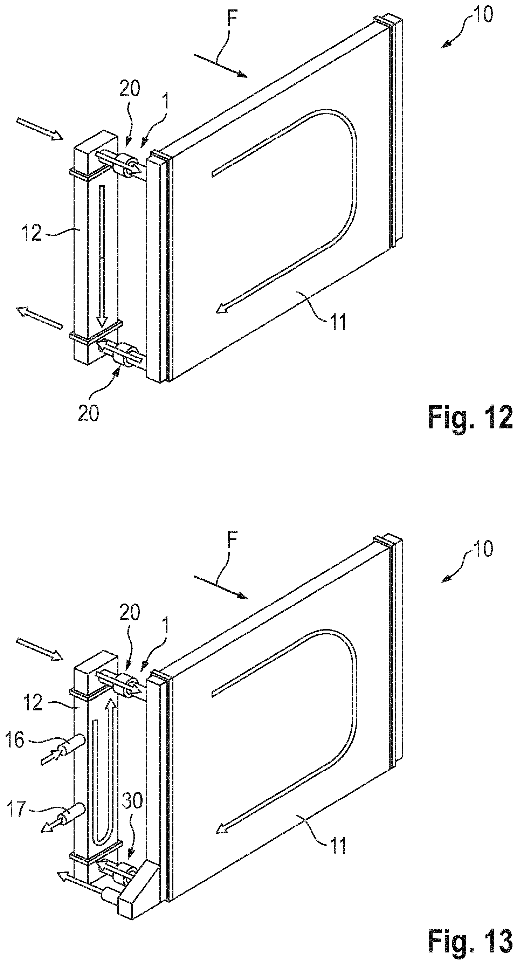

Die Fig. 12 und 13 zeigen die beispielhaft die Kombination von Wärmetauschern 11, 12 unterschiedlicher Größe respektive unterschiedlicher Kühlkapazität. Zudem ist die Fahrtrichtung mit F gekennzeichnet. Der kleinere Wärmetauscher ist hier jeweils dem größeren Wärmetauscher in Fahrtrichtung F nachgelagert. Die Kopplung erfolgt über ein Verbindungssystem 1 der oben erläuterten Art.

Fig. 12 veranschaulicht eine Parallelschaltung beider Wärmetauscher 11, 12, wohingegen in Fig. 13 eine Reihenschaltung dargestellt ist.

Über den kleineren Wärmetauscher kann gegebenenfalls ein zweites Fluid geführt werden, welches in Wärmeaustausch mit dem Hauptstrom der Wärmetauscheranordnung 10 steht. In Fig. 13 sind hierzu entsprechende Fluidanschlüsse 16 und 17 für das zweite Fluid dargestellt. Diese Anwendung kann beispielsweise für einen Getriebeölkühler zum Einsatz kommen, bei welchem das Getriebeöl über die Fluidanschlüsse 16 und 17 des kleineren Wärmetauschers geführt ist.

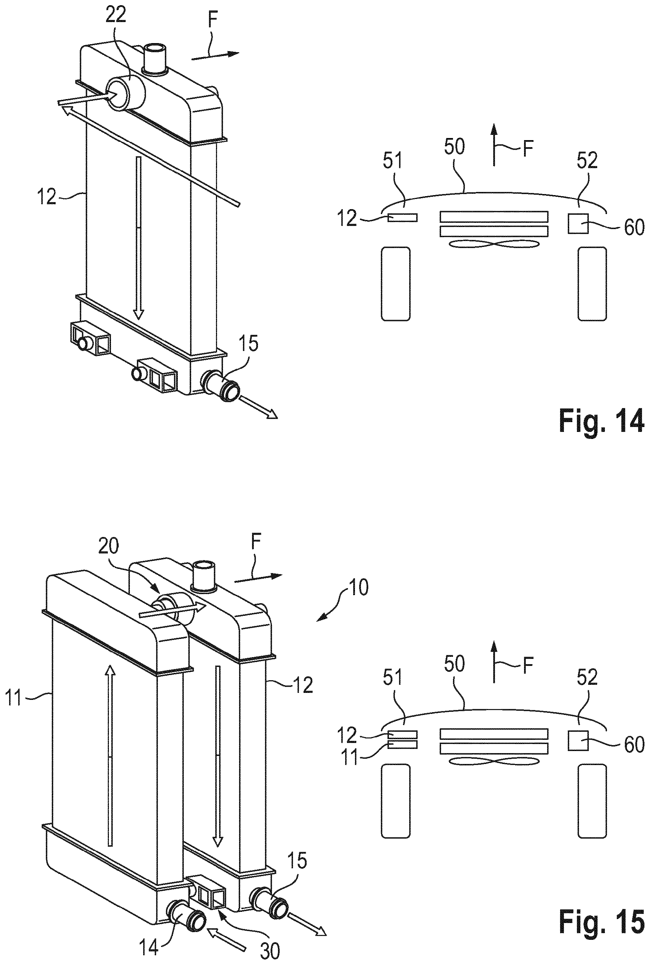

In den Fig. 14 und 15 wird nochmals der Modulgedanke veranschaulicht, welcher hier zur Steigerung der Kühlkapazität an einem Kraftfahrzeug 50 zum Einsatz kommt.

Fig. 14 zeigt eine Einbauvariante eines Zusatzkühlers mit lediglich einem Wärmetauscher 11 des Wärmetauschersystems 10 für einen geringeren Kühlleistungsbedarf. In Fig. 15 sind hingegen zwei Wärmetauscher 11 und 12 zu einer Wärmetauscheranordnung 10 zusammengeschlossen, wie dies oben bereits erläutert wurde, um im Vergleich zu einem einzigen Wärmetauscher eine höhere Kühlleistung bereitzustellen.

Die beiden Wärmetauscher 11, 12 sind in Fahrtrichtung F hintereinanderliegend angeordnet und derart fluidverbunden, dass Kühlmittel zunächst in den in Fahrtrichtung F hintenliegenden Wärmetauscher 11 eintritt, bevor dieses in den in Fahrtrichtung F vornliegenden Wärmetauscher 12 gelangt.

In dem in den Fig. 14 und 15 dargestellten Ausführungsbeispiel sind die Wärmetauscher 11 und 12 als Zusatzkühler in einem frontseitigen Radhaus 51 des Kraftfahrzeugs 50 angeordnet. Aufgrund der sehr kompakten Bauweise durch die Direktverbindung der Wärmetauscher 11 und 12 ist eine Unterbringung trotz der sehr beengten räumlichen Gegebenheiten im frontseitigen Radhaus 51 eines Kraftfahrzeugs 50 möglich. Dadurch kann wiederum eine Standheizung 60 im am Fahrzeug gegenüberliegenden frontseitigen Radhaus 52 verbaut werden.

Jedoch ist eine Unterbringung einer Wärmetauscheranordnung 10 auch an anderer Stelle im Kraftfahrzeug 50 möglich.

Die Erfindung wurde vorstehend anhand verschiedener Ausführungsbeispiele und -varianten näher erläutert. Diese dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf die konkret beschriebenen Ausführungsbeispiele, -varianten und Abwandlungen beschränkt, sondern umfasst alle durch die Patentansprüche definierten Ausgestaltungen.

### Bezugszeichenliste

- 1: Verbindungssystem
- 10: Wärmetauscheranordnung
- 11: Wärmetauscher
- 11a: Kopfstück
- 11b: Bodenstück
- 11c: Mittelabschnitt
- 12: Wärmetauscher
- 12a: Kopfstück
- 12b: Bodenstück
- 12c: Mittelabschnitt
- 13: Fluidanschluss
- 14: Fluidanschluss
- 15: Fluidanschluss
- 20: Schnellkupplung
- 21: Einsteckteil
- 22: Aufnahmeteil
- 30: Kopplungs- und Positioniereinrichtung
- 31: Führungszapfen
- 32: Buchse
- 33: Rasthaken
- 34: korrespondierende Ausnehmung
- 34a: Bügel
- 34b: Öffnung
- 40: Schaltventil
- 50: Kraftfahrzeug
- 51: Radhaus
- 52: Radhaus
- 60: Standheizung
- A: Ankopplungsebene
- F: Fahrtrichtung
- F_{P}: Fügerichtung der Kopplungs- und Positioniereinrichtung
- F_{S}: Fügerichtung der Schnellkupplung

## Patentansprüche

1. Verbindungssystem (1) zum Verbinden von zwei Wärmetauschern (11, 12), umfassend eine Schnellkupplung (20) zur Bereitstellung einer Fluidverbindung zwischen den zwei Wärmetauschern (11, 12), wobei die Schnellkupplung (20) ein Einsteckteil (21) zur Anordnung an einem ersten der zwei Wärmetauscher (11, 12) und ein Aufnahmeteil (22) für das Einsteckteil (21) an dem zweiten der zwei Wärmetauscher (12, 11) umfasst, wobei das Einsteckteil (21) und das Aufnahmeteil (22) eine Fügerichtung (Fs) für die Schnellkupplung (20) definieren,
**gekennzeichnet durch**
mindestens eine Kopplungs- und Positioniereinrichtung (30), wobei die Kopplungs- und Positioniereinrichtung (30) einen Führungszapfen (31) zur Anordnung an einem der zwei Wärmetauscher (11, 12) und eine Buchse (32) für den Führungszapfen (31) zur Anordnung an dem anderen der zwei Wärmetauscher (12, 11) umfasst, wobei der Führungszapfen (31) und die Buchse (32) eine translatorische Fügerichtung (F_{P}) für die Kopplungs- und Positioniereinrichtung (30) definieren, und
wobei die Fügerichtung (F_{S}) der Schnellkupplung (20) und die Fügerichtung (F_{P}) der Kopplungs- und Positioniereinrichtung (30) zueinander parallel sind.

2. Verbindungssystem (1) zum Verbinden von zwei Wärmetauschern (11, 12) nach Anspruch 1, **dadurch gekennzeichnet, dass** die Schnellkupplung (20) und die Kopplungs- und Positioniereinrichtung (30) jeweils zur Bewerkstelligung einer linearen Fügebewegung angeordnet und konfiguriert sind.

3. Verbindungssystem (1) zum Verbinden von zwei Wärmetauschern (11, 12) nach Anspruch 1 oder 2, **dadurch gekennzeichnet, dass** die Schnellkupplung (20) und die Kopplungs- und Positioniereinrichtung (30) derart aufeinander abgestimmt sind, dass bei einer linearen Fügebewegung in Fügerichtung (F_{P}, F_{S}) der Führungszapfen (31) und die Buchse (32) in Eingriff gelangen, bevor das Einsteckteil (21) und das Aufnahmeteil (22) in Kontakt gelangen.

4. Verbindungssystem (1) zum Verbinden von zwei Wärmetauschern (11, 12) nach einem der Ansprüche 1 bis 3, **dadurch gekennzeichnet, dass** die Schnellkupplung (20) und die Kopplungs- und Positioniereinrichtung (30) derart aufeinander abgestimmt sind, dass bei einer linearen Fügebewegung in Fügerichtung (F_{P}, F_{S}) die Kopplungs- und Positioniereinrichtung (20) verrastet, nachdem das Einsteckteil (21) und das Aufnahmeteil (22) der Schnellkupplung (20) in Kontakt gelangt sind.

5. Verbindungssystem (1) zum Verbinden von zwei Wärmetauschern (11, 12) nach einem der Ansprüche 1 bis 4, **dadurch gekennzeichnet, dass** die Schnellkupplung (20) und zwei Kopplungs- und Positioniereinrichtungen (30) in einer Anschlussebene (A) die Spitzen eines gedachten Dreiecks definieren.

6. Wärmetauscher (11, 12) für ein Kühlsystem eines Kraftfahrzeugs (50), umfassend ein Element einer Schnellkupplung (20) zur Bereitstellung einer Fluidverbindung zwischen zwei Wärmetauschern, wobei das Element ein Einsteckteil (21) oder ein Aufnahmeteil (22) für das Einsteckteil (21) ist,
**gekennzeichnet durch**
dass der Wärmetauscher (11, 12) ferner ein Element einer Kopplungs- und Positioniereinrichtung (30) umfasst, wobei dieses ein Führungszapfen (31) oder eine Buchse (32) für den Führungszapfen (31) ist,
wobei das Element der Schnellkupplung (20) und das Element der Kopplungs- und Positioniereinrichtung (30) zueinander parallele Fügerichtungen (F_{P}, F_{S}) in Bezug auf das jeweilige Gegenstück aufweisen.

7. Wärmetauscheranordnung (10) für ein Kraftfahrzeug mit einem ersten Wärmetauscher und einem zweiten Wärmetauscher (11, 12), welche durch ein Verbindungssystem (1) nach einem der vorgenannten Ansprüche 1 bis 5 miteinander verbunden sind.

8. Wärmetauscheranordnung (10) nach Anspruch 7, **dadurch gekennzeichnet, dass** zwischen dem ersten und zweiten Wärmetauscher (11, 12) ein Schaltventil (40) zum Schalten eines Kühlmittelstroms vorgesehen ist, um in einer ersten Stellung Kühlmittel lediglich über den ersten Wärmetauscher (12) zu leiten und in einer zweiten Stellung Kühlmittel über beide Wärmetauscher (11, 12) zu leiten.

9. Kraftfahrzeug (50) mit einer Wärmetauscheranordnung (10) nach Anspruch 7 oder 8, wobei der erste Wärmetauscher und der zweite Wärmetauscher (11, 12) in Fahrtrichtung hintereinanderliegend angeordnet und derart fluidverbunden sind, dass Kühlmittel zunächst in den in Fahrtrichtung (F) hintenliegenden Wärmetauscher (11) eintritt, bevor dieses in den in Fahrtrichtung (F) vornliegenden Wärmetauscher (12) gelangt.

10. Kraftfahrzeug (50) nach Anspruch 9, dass die Wärmetauscheranordnung (10) in einem Radhaus (51) des Kraftfahrzeugs (50) angeordnet ist.
